# EUROPÄISCHE PATENTSCHRIFT

(11) **EP 1 798 577 B1**
(45) Veröffentlichungstag und Bekanntmachung des Hinweises auf die Patenterteilung: **31.05.2017**
(21) Anmeldenummer: 06023063.8
(22) Anmeldetag: 06.11.2006
(51) Int. Cl.: G01V 8/14, G01V 8/22

(54) **Optoelektronische Vorrichtung und Verfahren zum Betreiben einer optoelektronischen Vorrichtung**
Optoelectronic device and method for operating an optoelectronic device
Dispositif électro-optique et méthode d'operation d'un tel dispositif

(30) Priorität: 16.12.2005 DE 102005060399
(43) Veröffentlichungstag der Anmeldung: 20.06.2007
(73) Patentinhaber: SICK AG, 79183 Waldkirch (DE)
(72) Erfinder: Zipfel, Steffen, 79286 Glottertal (DE); Jaksic, Davorin, 79211 Denzlingen (DE); Waslowski, Kai-Jürgen, 79312 Emmendingen (DE); Blümcke, Thomas, 79312 Emmendingen (DE); Hörsch, Ingolf, 79312 Emmendingen (DE)
(74) Vertreter: Manitz Finsterwald Patentanwälte PartmbB

(56) Entgegenhaltungen:
- EP-A1- 1 512 992
- EP-A2- 1 231 482
- WO-A1-97/05507
- DE-A1- 10 231 178
- DE-A1- 19 907 546
- DE-A1- 19 907 548
- JP-U- 50 125 776

## Beschreibung

Die vorliegende Erfindung betrifft ein Verfahren zur Detektion eines Gegenstandes, bei dem Licht von einem Sender in Richtung eines Reflektors ausgesandt wird, das ausgesandte Licht an dem Reflektor reflektiert wird und als Reflektorbild auf einen Detektionsbereich eines mindestens eindimensional ortsauflösenden Empfängers abgebildet und von diesem erfasst wird und das erfasste Reflektorbild ausgewertet und ein Gegenstanderfassungssignal erzeugt wird, wenn aufgrund der Auswertung des erfassten Reflektorbildes eine zumindest teilweise Unterbrechung des ausgesandten Lichts erkannt wird. Weiterhin ist die Erfindung auf eine Vorrichtung zum Durchführen eines entsprechenden Verfahrens gerichtet.

Bei Verfahren und Vorrichtungen der eingangs genannten Art wird üblicherweise ein Gegenstanderfassungssignal erzeugt, wenn der ausgesandte oder der reflektierte Lichtstrahl von einem in den Schutzbereich eindringenden Gegenstand unterbrochen wird, so dass beispielsweise die von dem Empfänger erfasste Energie (Lichtintensität, Helligkeit) gegenüber der erfassten Energie bei nicht unterbrochenem Strahlengang um einen vorgegebenen Schwellenwert reduziert ist. Als Detektionsbereich wird der Bereich des Empfängers bezeichnet, auf dem das Reflektorbild zu liegen kommt, wenn kein Gegenstand im Strahlengang vorhanden ist. Bei der Auswertung des erfassten Reflektorbildes können beispielsweise auch Form, Lage oder spezielle Codierungen des Reflektorbildes berücksichtigt werden. Als Gegenstand im Sinne der vorliegenden Anmeldung sind Objekte aller Art, unter anderem auch Personen zu verstehen.

Für die sichere Erkennung eines Gegenstandes ist es erforderlich, das Unterbrechen des ausgesandten bzw. reflektierten Lichtstrahls mit hoher Genauigkeit zu erkennen. Problematisch ist dabei, dass ein in den Sichtbereich des Empfängers eintretender Gegenstand sowohl das von dem Sender ausgesandte Licht wie auch das von dem Reflektor reflektierte Licht, insbesondere auch Streulicht, oder sonstiges Störlicht so reflektieren bzw. remittieren kann, dass das an dem Gegenstand reflektierte bzw. remittierte Licht auf den Detektionsbereich des Empfängers trifft. In diesem Fall kann trotz einer Unterbrechung des Strahlengangs von dem Empfänger im Detektionsbereich eine Lichtintensität festgestellt werden, die der Lichtintensität bei nicht unterbrochenem Strahlengang entspricht, so dass fälschlicherweise kein Gegenstanderfassungssignal erzeugt wird.

Um diese Probleme zu vermeiden, werden bei bekannten Verfahren beispielsweise Polarisationsfilter zur optischen Reduktion der störenden Lichtsignale eingesetzt. Da je nach Anwendungsfall jedoch auch die den ausgesandten Lichtstrahl unterbrechenden Gegenstände depolarisierende oder polarisationsändernde Materialien umfassen können, ist auch durch diese Maßnahme nicht immer ein sicheres Erkennen von entsprechenden Gegenständen gewährleistet.

Die beschriebenen Probleme treten insbesondere dann auf, wenn die Gegenstände reflektierende Bereiche besitzen. Insbesondere wenn die reflektierenden Bereiche an Schrägflächen oder an an der Oberfläche des Gegenstandes vorhandenen Radien, wie beispielsweise abgerundete Kanten, auftreten, ist die Wahrscheinlichkeit, dass ein an dem Gegenstand reflektierter Lichtstrahl auf dem Empfänger trifft, relativ groß. Die in diesem Fall von den reflektierten Bereichen auf dem Empfänger erzeugte Lichtintensität ist dabei oftmals in der gleichen Größenordnung wie die Lichtintensität des von dem Reflektor bei nicht unterbrochenem Strahlengang erzeugten Reflektorbildes, so dass bei der energetischen Auswertung des Reflektorbildes in diesen Fällen fälschlicherweise von einem nicht unterbrochenen Strahlengang ausgegangen wird.

Auch sonstige von dem ausgesandten Licht unabhängige Störlichtsignale können direkt oder indirekt, beispielsweise über einen Gegenstand, auf den Detektionsbereich des Empfängers fallen und somit trotz unterbrochenen Strahlengangs einen nicht unterbrochenen Strahlengang vortäuschen.

Ein Verfahren mit den Merkmalen des Oberbegriffs des Anspruchs 1 ist aus der WO 97/05507 A1 bekannt.

Es ist eine Aufgabe der vorliegenden Erfindung, ein Verfahren sowie eine Vorrichtung der eingangs genannten Art so auszubilden, dass die Erkennung einer Unterbrechung des ausgesandten Lichts durch einen Gegenstand gegenüber bekannten Verfahren und Vorrichtung verbessert wird. Ausgehend von einem Verfahren der eingangs genannten Art wird diese Aufgabe erfindungsgemäß durch die Merkmale des Verfahrensanspruch 1 und des Vorrichtungsanspruch 14 gelöst.

Als Lichtobjekte werden in der vorliegenden Anmeldung sämtliche auf den Empfänger auftreffende Lichtsignale (z.B. unabhängige Störlichtsignale, an einem Gegenstand reflektierte oder remittierte Lichtsignale oder am Reflektor reflektierte Lichtsignale) bezeichnet. Wie bereits beschrieben, können beim Eindringen eines Gegenstandes in den ausgesandten oder den am Reflektor reflektierten Lichtstrahl oder durch sonstiges Störlicht Lichtobjekte so auf den Empfänger abgebildet werden, dass sie in den Detektionsbereich des Empfängers fallen. Ist die Lichtintensität des erfassten Lichtobjektes in etwa gleich der Lichtintensität des Reflektorbildes bei nicht unterbrochenem Strahlengang, so würde fälschlicherweise kein Gegenstanderfassungssignal erzeugt. Durch die erfindungsgemäße Klassifizierung der Lichtobjekte und Auswertung der Bewegung der als Störlichtobjekte klassifizierten Lichtobjekte sowie die Erzeugung des Gegenstanderfassungssignals in Abhängigkeit von der ermittelten Bewegung kann ein solches fehlerhaftes Nichterfassen eines Gegenstandes verhindert werden.

Wird der ausgesandte oder der von dem Reflektor reflektierte Lichtstrahl von einem Gegenstand unterbrochen, ohne dass dabei das von dem Gegenstand reflektierte oder remittierte Licht in den Detektionsbereich des Empfängers trifft, so wird das Gegenstanderfassungssignal in üblicher Weise durch Auswertung des Reflektorbilds erkannt. Die Auswertung kann dabei auf bestimmte Eigenschaften des erfassten Reflektorbildes wie beispielsweise Helligkeit, Form, Wellenlänge, Pulsfrequenz oder Vorhandensein einer aufgeprägten Codierung beschränkt sein oder auch einen Vergleich mit einem vorgegebenen, abgespeicherten Referenz-Reflektorbild umfassen.

Tritt ein reflektierende Bereiche umfassender Gegenstand in einen vordefinierten Fangbereich der erfindungsgemäßen Vorrichtung ein, der durch einen Teil oder den gesamten Sichtbereich des Empfängers definiert ist, so können bereits bevor der ausgesandte bzw. der reflektierte Lichtstrahl von dem Gegenstand unterbrochen wird, ein oder mehrere Lichtobjekte auf dem Empfänger erzeugt werden. Diese Lichtobjekte können dadurch entstehen, dass beispielsweise von dem Reflektor zurückgestrahltes Streulicht auf den in den Fangbereich eindringenden Gegenstand fällt, wodurch entsprechende Lichtobjekte auf dem Empfänger erzeugt werden.

Sofern diese Lichtobjekte außerhalb des Detektionsbereichs auf den Empfänger treffen und von diesem erfasst werden, wird die normale Auswertung des erfassten Reflektorbildes nicht gestört. Durch die erfindungsgemäße Klassifizierung dieser Lichtobjekte sowie die Ermittlung der Bewegung der Störlichtobjekte werden jedoch vorbereitende Auswertungen vorgenommen, die eine spätere, falsche Auswertung des Reflektorbildes verhindern.

Nach einer vorteilhaften Ausführungsform der Erfindung bildet ein vordefinierter Bereich des Empfängers den Detektionsbereich. Die Position, Größe und Form des Detektionsbereichs kann beispielsweise in einem Einlernvorgang ohne vorhandenen Gegenstand eingelernt und abgespeichert werden. Dies ist insbesondere dann sinnvoll, wenn der Detektionsbereich im Betrieb unveränderbar ist, oder auch als Initial-Detektionsbereich nach Inbetriebnahme einer erfindungsgemäßen Vorrichtung.

Es ist jedoch auch möglich, dass im Falle einer Klassifizierung des Lichtobjekts als Reflektorbild der von dem Reflektorbild beaufschlagte Bereich des Empfängers als Detektionsbereich festgelegt wird. Dieser kann sich insbesondere in seiner Position, Größe oder Form ändern, wenn Sender, Reflektor und/oder Empfänger beispielsweise aufgrund von Erschütterungen gegeneinander im Betrieb bewegen. Wird somit das erfasste Lichtobjekt als Reflektorobjekt klassifiziert, so kann der Detektionsbereich anhand des erfassten Lichtobjekts dynamisch festgelegt werden.

Nach einer weiteren bevorzugten Ausführungsform der Erfindung werden als Objekteigenschaften die Position auf dem Empfänger und/oder die Lichtintensität und/oder die Form und/oder die Bewegungsrichtung und/oder die Bewegungsgeschwindigkeit und/oder die Wellenlänge des Lichtobjekts ermittelt. Vorteilhaft kann das ausgesandte Licht beispielsweise durch einen codierten Reflektor oder Filter mit einem Code versehen werden und zur Ermittlung der Objekteigenschaften das Lichtobjekt auf das Vorhandensein dieses Codes untersucht werden. Es ist auch möglich, dass gepulstes Licht verwendet wird und zur Ermittlung der Objekteigenschaft das Lichtobjekt auf das Vorhandensein der verwendeten Pulsfrequenz untersucht wird.

Die ermittelten Objekteigenschaften können miteinander nach vorgegebenen Regeln verknüpft werden. Diese Regeln können beispielsweise durch vorgegebene Algorithmen, neuronale Netze oder Fuzzylogik realisiert werden. Auch ist eine unterschiedliche Gewichtung der einzelnen Objekteigenschaften möglich.

Einzelne Objekteigenschaften können dabei eine positive oder eine negative Klassifizierung eines Lichtobjektes als Reflektorbild oder als Störlichtobjekt bewirken. Weiterhin können Objekteigenschaften lediglich notwendige oder auch hinreichende Kriterien für eine Klassifizierung sein. So ist beispielsweise die erfasste Position eines Lichtobjekts auf dem Empfänger im Falle einer unveränderbaren Position des Detektionsbereichs ein hinreichendes Kriterium zur Klassifizierung als Störlichtobjekt, wenn sie von der festen Position des Detektionsbereichs abweicht. In ähnlicher Weise kann z.B. das Fehlen einer dem ausgesandten Licht beispielsweise über einen codierten Reflektor aufgeprägten Codierung oder das Fehlen einer vorgegebenen Pulsfrequenz ein hinreichendes Kriterium zur Klassifizierung als Störlichtobjekt sein. Erfindungsgemäß wird die Auswertung des Reflektorbildes unterbrochen, wenn aufgrund der ermittelten Bewegung des Störlichtobjekts eine bevorstehende oder eine vorhandene, zumindest teilweise Überlappung des Störlichtobjekts mit dem Detektionsbereich erkannt wird. Mit der Erfindung wird somit das erfasste Lichtobjekt bereits untersucht, bevor es in den Detektionsbereich eintritt und mit diesem zusammenfällt. Wird der ausgesandte Lichtstrahl durch einen Gegenstand unterbrochen, so dass zunächst ein Lichtobjekt auf dem Empfänger außerhalb des Detektionsbereichs erzeugt wird, wird aufgrund der Unterbrechung ein Gegenstanderfassungssignal und damit verbunden ein Schaltzustand "Gegenstand erfasst" eingestellt. Durch die Nachverfolgung der Bewegung des Störlichtobjekts wird erfindungsgemäß erkannt, wenn sich dieses Störlichtobjekt in Richtung auf den Detektionsbereich bewegt. Bevor das nachverfolgte Störlichtobjekt in diesen kritischen Bereich eindringt, wird erfindungsgemäß die Auswertung des Reflektorbildes unterbrochen. Dadurch wird verhindert, dass aufgrund des Störlichtobjekts eine vermeintliche Nichtunterbrechung des Strahlengangs erkannt wird. Da vor Unterbrechung der Auswertung des Reflektorbildes der Schaltzustand auf "Gegenstand erfasst" gesetzt wurde, wird vorteilhaft dieser Schaltzustand auch während der Unterbrechung der Auswertung des Reflektorbildes beibehalten.

Bevorzugt kann eine bevorstehende Überlappung des Störlichtobjektes mit dem Detektionsbereich durch Auswertung der Bewegungsrichtung, Bewegungsgeschwindigkeit und Lage des nachverfolgten Störlichtobjektes erkannt werden.

Wird das nachverfolgte Störlichtobjekt wieder außerhalb des Detektionsbereichs erfasst, so kann die Auswertung des Reflektorbildes wieder aufgenommen werden.

Nach einer weiteren vorteilhaften Ausführungsform der Erfindung wird bei der Auswertung des Reflektorbildes eine zu erwartende Helligkeit des Störlichtobjektes von der im Detektionsbereich erfassten Helligkeit subtrahiert, wenn aufgrund der erfassten Bewegung des Störlichtobjektes eine bevorstehende oder eine vorhandene, zumindest teilweise Überlappung des Störlichtobjektes mit dem Detektionsbereich erkannt wird, wobei die zu erwartende Helligkeit des Störlichtobjektes aus der Helligkeit des Störlichtobjektes vor Erreichen des Detektionsbereichs ermittelt wird. Dabei kann neben der Helligkeit auch die Form des Reflektorbildes und/oder des Störlichtobjektes ausgewertet werden.

Bei dieser Ausführungsform wird die Auswertung des Reflektorbildes nicht unterbrochen, sondern die durch das Störlichtobjekt erzeugte, zusätzliche Helligkeit wird durch Subtraktion kompensiert. Durch diese Kompensation wird vermieden, dass ein in den Detektionsbereich fallendes Störlichtobjekt fälschlicherweise als Reflektorbild eingestuft wird und damit eine Unterbrechung des Strahlengangs nicht erkannt wird.

Vorteilhaft wird die Bewegung des Störlichtobjektes durch Erfassung der jeweiligen Position des Störlichtobjektes in zeitlich aufeinander folgenden Auswerteintervallen ermittelt. Bevorzugt wird dabei eine bevorstehende Überlappung des Störlichtobjektes mit dem Detektionsbereich erkannt, wenn bei angenommener gleichbleibender Bewegung des Störlichtobjektes dieses nach einer vorgegebenen Anzahl von Auswerteintervallen zumindest teilweise in den Detektionsbereich fallen würde. Die Anzahl der Auswerteintervalle kann dabei je nach Anwendungsfall vorgegeben werden.

Grundsätzlich ist für bestimmte Fälle die Verwendung eines eindimensional ortsauflösenden Empfängers ausreichend. Vorteilhaft wird jedoch ein zweidimensional ortsauflösender Empfänger verwendet, da die Anzahl der mit dem zweidimensional ortsauflösenden Empfänger erfassbaren Störlichtobjekte deutlich erhöht wird.

Nach einer weiteren vorteilhaften Ausführungsform der Erfindung wird auch ein innerhalb des Detektionsbereichs auf den Empfänger auftreffendes Lichtobjekt von diesem erfasst, auf vorgegebene Objekteigenschaften untersucht und anhand der ermittelten Objekteigenschaften als Reflektorbild oder als Störlichtobjekt klassifiziert. Bei einer Klassifizierung als Reflektorbild kann der Schaltzustand auf "kein Gegenstand vorhanden" gesetzt werden, während bei einer Klassifizierung als Störlichtobjekt die Auswertung des erfassten Reflektorbildes wie bereits beschrieben durchgeführt werden kann. Beispielsweise ist auch in diesem Fall eine Unterbrechung der Auswertung oder eine Subtraktion der Helligkeit des Störlichtobjekts von der im Detektionsbereich ermittelten Gesamthelligkeit möglich.

Nach einer weiteren vorteilhaften Ausführungsform der Erfindung wird ein Schielwinkel des Senders, das heißt ein Winkel zwischen der optischen Achse des Senders und der optischen Achse eines das ausgesandte Licht auf den Reflektor abbildenden optischen Elements, und/oder ein Schielwinkel des Empfängers, das heißt ein Winkel zwischen der optischen Achse des Empfängers und der optischen Achse eines das reflektierte Licht auf den Empfänger abbildenden optischen Elements, durch Berücksichtigen der Position des Reflektorbildes und/oder des Störlichtobjektes auf dem Empfänger kompensiert. Bei der Verwendung von nicht ortsauflösenden Empfängern ist eine aufwändige Justierung erforderlich, um den Schielwinkel möglichst gering zu halten. Da durch den Schielwinkel die Genauigkeit der Detektion einer Gegenstandvorderkante bestimmt wird, ist ohne eine entsprechende aufwändige Justierung keine genaue Positionsbestimmung des Gegenstandes möglich. Durch die Verwendung eines ortsauflösenden, insbesondere eines zweidimensional ortsauflösenden Empfängers kann der Schielwinkel durch entsprechende Auswertung softwareseitig kompensiert werden.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher erläutert; in diesen zeigen:
- Fig. 1: eine schematische Darstellung einer erfindungsgemäß ausgebildeten Überwachungsvorrichtung,
- Fig. 2: eine Draufsicht auf einen zweidimensionalen Empfänger nach Fig. 1 mit Reflektorbild,
- Fig. 3: die Vorrichtung nach Fig. 1 mit in den ausgesandten Lichtstrahl eingetretenem Gegenstand, und
- Fig. 4 bis 6: drei unterschiedliche Ansichten auf den zweidimensionalen Sensor gemäß Fig. 2 während unterschiedlicher Phasen beim Eintreten des Gegenstandes in den Lichtstahl.

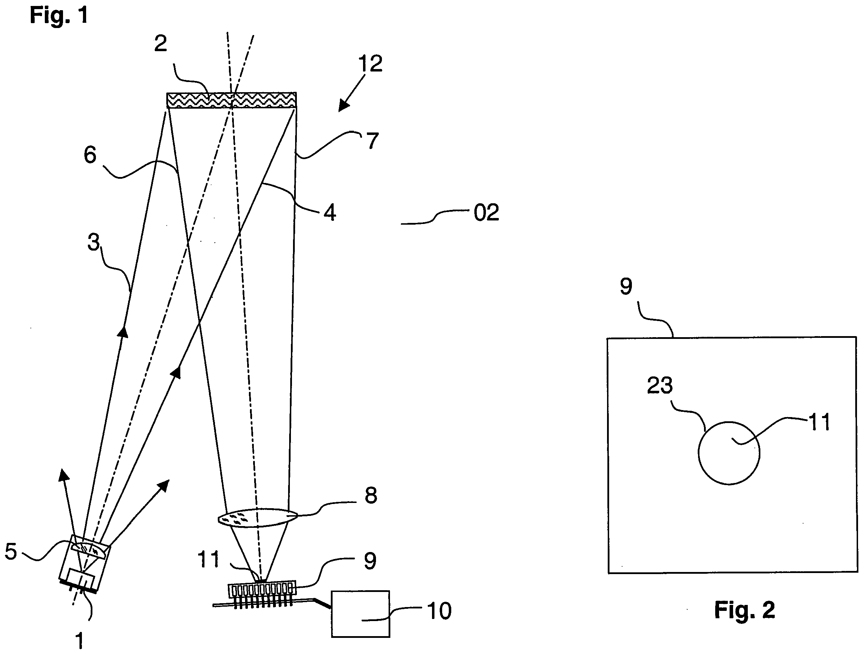

Fig. 1 zeigt eine einen Sender 1 bildende Lichtquelle, welche Licht in Richtung eines Reflektors 2 aussendet. Ein Ausschnitt des ausgesandten Lichts ist dabei durch Randstrahlen 3, 4 begrenzt und wird über eine Sendeoptik 5 auf den Reflektor 2 gelenkt.

Das durch Randstrahlen 6, 7 dargestellte, von dem Reflektor 2 reflektierte Licht wird von einer Empfangsoptik 8 auf einen zweidimensional ortsauflösenden Empfänger 9 abgebildet. Der Empfänger kann dabei beispielsweise als CCD- oder CMOS-Matrix oder als sonstiges geeignetes Empfangselement ausgebildet sein. Für die weiteren Ausführungen wird vereinfachend angenommen, dass der Reflektor 2 mit der Empfangsoptik 8 auch bei unterschiedlichem Objektabstand mehr oder weniger gut auf dem ortsauflösenden Empfänger 9 abgebildet wird.

Das ausgesandte Licht kann noch weiter als in Fig. 1 dargestellt aufgeweitet sein, so dass eine genaue Ausrichtung des Senders 1 und der Sendeoptik 5 zu dem Reflektor 2 nicht erforderlich ist. Die Aufweitung kann jedoch auch geringer als in Fig. 1 dargestellt und insbesondere auch annähernd punktförmig sein, so dass beispielsweise eine dem Sendelichtbündel aufgeprägte räumliche Modulation über den Reflektor 2 und die Empfangsoptik 8 auf den Empfänger 9 abgebildet wird.

Grundsätzlich muss es sich bei dem Licht gemäß der vorliegenden Anmeldung nicht um sichtbares Licht handeln, sondern es können elektromagnetische Wellen unterschiedlichster Frequenzen verwendet werden, die für den Aufbau einer Lichtschranke geeignet sind. Sender 1, Reflektor 2 und Empfänger 9 sowie Sende- und Empfangsoptiken 5, 8 sind jeweils entsprechend der verwendeten elektromagnetischen Wellen ausgebildet.

An den Empfänger 9 ist eine Auswerteeinheit 10 angeschlossen, über die die von dem Empfänger 9 aufgrund des auftreffenden Lichts erzeugten elektrischen Signale ausgewertet werden. Vor der Empfangsoptik 8 ist ein optischer Fangbereich 12 ausgebildet, der durch die Empfangsoptik 8 und die Dimension des Empfängers 9 festgelegt ist.

Fig. 2 zeigt schematisch eine Draufsicht auf die lichtempfindliche Fläche des Empfängers 9.

In der Mitte des Empfängers 9 ist ein Reflektorbild 11, d.h. das von der Empfangsoptik 8 aufgrund des am Reflektor 2 reflektierten Lichts auf den Empfänger 9 scharf oder unscharf abgebildete Bild des Reflektors 2 dargestellt. Das dargestellte Reflektorbild 11 entspricht dem in Fig. 1 gezeigten Zustand, bei dem weder das ausgesandte Licht noch das reflektierte Licht von einem Gegenstand unterbrochen wird. Durch den Bereich des Reflektorbilds 11 bei nicht vorhandenem Gegenstand gemäß Fig. 2 wird somit ein Detektionsbereich 23 definiert.

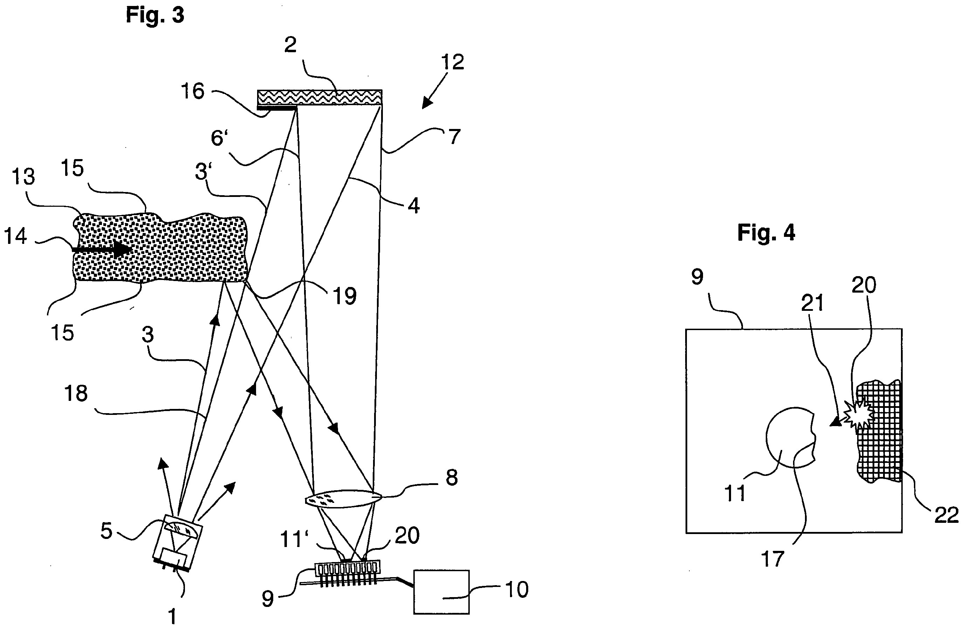

In Fig. 3 ist ein Gegenstand 13 dargestellt, der sich gemäß einem Pfeil 14 im Fangbereich 12 bewegt. Der Gegenstand 13 besitzt dabei eine Oberfläche mit einer Vielzahl von Wölbungen und abgerundeten Kanten 15 und besitzt zumindest teilweise eine reflektierende Oberfläche.

Bei der in Fig. 3 dargestellten Position des Gegenstandes 13 wird ein Teil des durch die Randstrahlen 3, 4 begrenzten ausgesandten Lichtausschnitts blockiert, so dass auf dem Reflektor 2 ein abgeschatteter Bereich 16 entsteht. Das auf dem Reflektor 2 auftreffende Licht wird entsprechend durch Randstrahlen 3', 4 begrenzt, so dass das an dem Reflektor 2 reflektierte, durch Randstrahlen 6', 7 begrenzte Licht von der Empfangsoptik 8 auf den Empfänger 9 abgebildet wird und dort gemäß Fig. 4 ein Reflektorbild 11 erzeugt, dessen in Fig. 4 rechter Bereich aufgrund der Abschattung eine Einbuchtung 17 besitzt.

Aufgrund der reflektiven Eigenschaften der Oberfläche des Gegenstandes 13 werden Lichtstrahlen im Winkelbereich zwischen den Randstrahlen 3-3' in Richtung zum Empfänger 9 reflektiert und bilden auf diesem über die Empfangsoptik 8 ein Störlichtobjekt 20. Bei Bewegung des Gegenstandes 13 gemäß dem Pfeil 14 in Richtung des Detektionsbereichs 23 des Empfängers 9 verschiebt sich das Störlichtobjekt 20, wie es durch einen Pfeil 21 in Fig. 4 angedeutet ist.

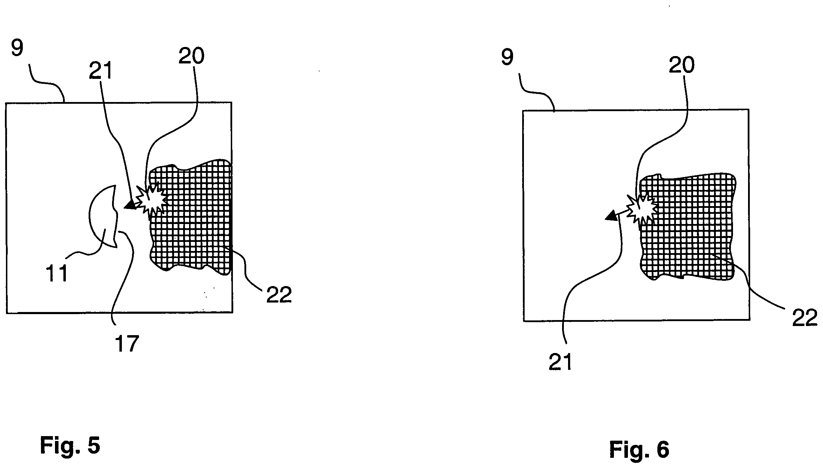

Bei einer weiteren Bewegung des Gegenstandes 13 wird die Fläche des Reflektorbildes 11 (Fig. 5) durch die zunehmende Abschattung immer kleiner, bis es bei einer vollständigen Abdeckung des ausgesandten Lichts oder des am Reflektor 2 reflektierten Lichts durch den Gegenstand 13 vollständig verschwindet (Fig. 6).

Gleichzeitig wandert das Störlichtobjekt 20 entlang des Pfeils 21 auf dem Empfänger 9, bis das Störlichtobjekt 20 vollständig in den Bereich des ursprünglichen Reflektorbilds 11 eingetreten ist, wie es in Fig. 6 dargestellt ist.

Gemäß Fig. 4 bildet das Remissionsbild des Gegenstands 13 ein zweites Störlichtobjekt 22 auf dem Empfänger 9, das aufgrund diffuser Reflexion des auf den Gegenstand 13 auftreffenden Lichts durch die Empfangsoptik 8 auf dem Empfänger 9 erzeugt wird. Wie aus den Fig. 5 und 6 zu erkennen ist, vergrößert sich das Störlichtobjekt 22 bei einer weiteren Bewegung des Gegenstandes 13, weil auch das Remissionsbild, d.h. das Störlichtobjekt 22 sich in die Mitte des Empfängers 9 bewegt.

Im Folgenden wird die Funktionsweise der Erfindung näher beschrieben.

Grundsätzlich wird mit dem erfindungsgemäßen Verfahren ein Gegenstanderfassungssignal erzeugt, wenn aufgrund der Auswertung des tatsächlich erfassten Reflektorbildes 11 eine Unterbrechung des ausgesandten Lichts erkannt wird. Unter ausgesandtem Licht ist dabei auch der am Reflektor 2 reflektierte Teil des Lichts zu verstehen. Die Auswertung kann dabei einen Vergleich der erfassten Helligkeit, Form, Größe, Position oder einer sonstigen geeigneten Eigenschaft des erfassten Reflektorbildes 11 mit einem entsprechend vorgegebenen Wert umfassen, wie er bei Nichtvorhandensein eines Gegenstandes 13 im Strahlengang vorliegt.

Zusätzlich werden mit dem erfindungsgemäßen Verfahren jedoch Vorbereitungen getroffen, dass durch außerhalb des Detektionsbereichs 23 erfasste Lichtobjekte keine Verfälschungen der Auswertung zu einem späteren Zeitpunkt erfolgen können. So wird mit der Erfindung beispielsweise vermieden, dass bei der Konstellation gemäß Fig. 6, bei der das erfasste Reflektorbild 11 zwar völlig verschwunden ist, gleichzeitig jedoch das Störlichtobjekt 20 in den Detektionsbereich 23 des Empfängers 9 fällt, durch eine Auswertung des Störlichtobjektes 20 fehlerhafterweise kein Gegenstanderfassungssignal erzeugt wird.

Erfindungsgemäß werden außerhalb des Detektionsbereichs 23 auf den Empfänger 9 auftreffende Lichtobjekte 20 von diesem erfasst und auf vorgegebene Objekteigenschaften untersucht. Wird aufgrund der ermittelten Objekteigenschaften erkannt, dass es sich bei dem erfassten Lichtobjekt nicht um das Reflektorbild 11 handeln kann, so wird das erfasste Lichtobjekt durch eine Klassifizierungseinheit 24 als Störlichtobjekt 20 klassifiziert. Weiterhin wird die durch den Pfeil 21 angedeutete Bewegung des Störlichtobjektes 20 auf der Oberfläche des Empfängers 9 laufend bzw. in zeitlich nacheinanderfolgenden Auswerteintervallen durch eine Bewegungserfassungseinheit 25 ermittelt und es wird überprüft, ob aufgrund der ermittelten Bewegung eine Überlappung des Störlichtobjektes 20 mit dem Detektionsbereich 23 zu erwarten ist.

Wird beispielsweise gemäß den Fig. 4 und 5 aufgrund der erfassten Bewegung des Störlichtobjektes 20 erkannt, dass im nächsten Auswerteintervall das Störlichtobjekt 20 in den Detektionsbereich 23 fällt, wie es in Fig. 6 dargestellt ist, so wird die Auswertung des Reflektorbildes 11 beispielsweise so lange unterbrochen, bis das Störlichtobjekt 20 wieder aus dem Detektionsbereich 23 ausgetreten ist. Das gemäß Fig. 6 in den Detektionsbereich 23 fallende Störlichtobjekt 20 wird daher gemäß der Erfindung nicht fälschlicherweise als Reflektorbild 11 erkannt.

Bereits bei den in den Fig. 4 und 5 dargestellten Zuständen wird aufgrund der geänderten Form und/oder aufgrund der damit verbundenen verringerten Helligkeit des erfassten Reflektorbildes 11 ein Gegenstanderfassungssignal erzeugt. Der damit verbundene Schaltzustand "Gegenstand erfasst" wird während der erfindungsgemäßen Unterbrechung der Auswertung des Reflektorbildes 11 solange beibehalten, bis die Unterbrechung der Auswertung des Reflektorbildes 11 aufgehoben wird.

In einer weiteren Ausgestaltung der Erfindung ist es möglich, dass anstelle der Unterbrechung der Auswertung des Reflektorbildes 11 eine zu erwartende Helligkeit des Störlichtobjektes 20 von der im Detektionsbereich 23 erfassten Helligkeit durch einen Subtraktionseinheit 26 subtrahiert wird und das Ergebnis dieser Subtraktion für die Auswertung der Helligkeit des Reflektorbildes 11 verwendet wird. Die zu erwartende Helligkeit des Störlichtobjektes 20 wird dabei aus der Helligkeit des Störlichtobjektes 20 vor Erreichen des Detektionsbereichs 23 ermittelt. Beispielsweise kann die Helligkeit des Störlichtobjektes 20 in dem unmittelbar vorausgehenden Auswerteintervall verwendet werden. Grundsätzlich ist es auch möglich die zu erwartende Helligkeit des Störlichtobjektes 20 aus der Helligkeit des Störlichtobjektes 20 aus mehreren vorhergehenden Auswerteintervallen, beispielsweise durch eine Durchschnittsbildung dieser Helligkeiten, zu ermitteln.

Während in den Fig. 1 und 3 die erfindungsgemäße Vorrichtung in Form einer V-förmigen optischen Anordnung ausgebildet ist, kann die erfindungsgemäße Vorrichtung grundsätzlich auch als Autokollimationsvorrichtung, insbesondere mit Verwendung eines Retroreflektors ausgebildet sein. Zur weiteren Verbesserung der Störsicherheit kann die Vorrichtung in bekannter Weise eine strukturierte Beleuchtung und/oder einen strukturierten Reflektor umfassen.

Weiterhin ist mit der Erfindung keine aufwändige Justierung von Sender 1 und Sendeoptik 5 sowie von Empfänger 9 und Empfängeroptik 8 erforderlich, um auftretende Schielwinkel von Sender oder Empfänger zu vermeiden. Entsprechende Schielwinkel haben lediglich zur Folge, dass sich beispielsweise der Detektionsbereich 23 auf dem Empfänger 9 gegenüber einer Position mit Schielwinkel gleich Null verschiebt. Da eine entsprechende Verschiebung auch bei den Störlichtobjekten 20, 22 erfolgt, werden entsprechende Schielwinkel bei der Auswertung durch Bezugnahme auf den Detektionsbereich 23 automatisch kompensiert.

### Bezugszeichenliste

- 1: Sender
- 2: Reflektor
- 3, 3': Randstrahlen
- 4, 4': Randstrahlen
- 5: Sendeoptik
- 6, 6': Randstrahlen
- 7: Randstrahlen
- 8: Empfangsoptik
- 9: Empfänger
- 10: Auswerteeinheit
- 11: Reflektorbild
- 12: Fangbereich
- 13: Objekt
- 14: Pfeil
- 15: Wölbungen, abgerundete Kanten
- 16: abgeschatteter Bereich
- 17: Einbuchtung
- 18: Lichtstrahl
- 19: Vorderkante
- 20: Störlichtobjekt
- 21: Pfeil
- 22: Störlichtobjekt
- 23: Detektionsbereich
- 24: Klassifizierungseinheit
- 25: Bewegungserfassungseinheit
- 26: Subtraktionseinheit

## Patentansprüche

1. Verfahren zur Detektion eines Gegenstandes, bei dem Licht von einem Sender (1) in Richtung eines Reflektors (2) ausgesandt wird, das ausgesandte Licht an dem Reflektor (2) reflektiert wird und als Reflektorbild (11) auf einen Detektionsbereich eines mindestens eindimensional ortsauflösenden Empfängers (9) abgebildet und von diesem erfasst wird, und das erfasste Reflektorbild ausgewertet und ein Gegenstanderfassungssignal erzeugt wird, wenn aufgrund der Auswertung des erfassten Reflektorbildes eine zumindest teilweise Unterbrechung des ausgesandten Lichts erkannt wird,
wobei ein außerhalb des Detektionsbereichs (23) auf den Empfänger (9) auftreffendes Lichtobjekt von diesem erfasst, auf vorgegebene Objekteigenschaften untersucht und anhand der ermittelten Objekteigenschaften als Reflektorbild oder als Störlichtobjekt klassifiziert wird,
wobei - im Falle einer Klassifizierung als Störlichtobjekt - eine Bewegung des Störlichtobjekts auf dem Empfänger (9) ermittelt wird, und
wobei die Erzeugung des Gegenstanderfassungssignals in Abhängigkeit von der ermittelten Bewegung des Störlichtobjekts durchgeführt wird,
**dadurch gekennzeichnet,**
**dass** die Auswertung des Reflektorbildes (11) unterbrochen wird, wenn aufgrund der ermittelten Bewegung des Störlichtobjekts eine bevorstehende oder eine vorhandene, zumindest teilweise Überlappung des Störlichtobjekts (20) mit dem Detektionsbereich erkannt wird.

2. Verfahren nach Anspruch 1,
**dadurch gekennzeichnet,**
**dass** ein vordefinierter Bereich des Empfängers den Detektionsbereich bildet.

3. Verfahren nach Anspruch 1 oder 2,
**dadurch gekennzeichnet,**
**dass** im Falle einer Klassifizierung des Lichtobjekts als Reflektorbild der von dem Reflektorbild beaufschlagte Bereich des Empfängers als Detektionsbereich festgelegt wird.

4. Verfahren nach einem der vorhergehenden Ansprüche,
**dadurch gekennzeichnet ,**
**dass** ein vor dem Unterbrechen der Auswertung des Reflektorbildes (20) durch das Gegenstandfassungssignal gekennzeichneter Gegenstanderfassungszustand während der Unterbrechung aufrechterhalten wird.

5. Verfahren nach einem der vorhergehenden Ansprüche,
**dadurch gekennzeichnet,**
**dass** eine bevorstehende Überlappung des Störlichtobjekts (20) mit dem Detektionsbereich (23) erkannt wird, wenn bei angenommener gleich bleibender Bewegung des Störlichtobjekts (20) dieses nach einer vorgegebenen Anzahl von Auswerteintervallen zumindest teilweise in den Detektionsbereich (23) fallen würde.

6. Verfahren nach einem der vorhergehenden Ansprüche,
**dadurch gekennzeichnet,**
**dass** die Bewegung des Störlichtobjekts (20) durch Erfassung der jeweiligen Position des Störlichtobjekts (20) in zeitlich aufeinander folgenden Auswerteintervallen ermittelt wird.

7. Verfahren nach einem der vorhergehenden Ansprüche,
**dadurch gekennzeichnet,**
**dass** als Objekteigenschaften die Position auf dem Empfänger und/oder die Lichtintensität und/oder die Form und/oder die Bewegungsrichtung und/oder die Bewegungsgeschwindigkeit und/oder die Wellenlänge des Lichtobjekts ermittelt werden.

8. Verfahren nach einem der vorhergehenden Ansprüche,
**dadurch gekennzeichnet,**
**dass** das ausgesandte Licht beispielsweise durch einen codierten Reflektor oder Filter mit einem Code versehen wird und zur Ermittlung der Objekteigenschaft das Lichtobjekt auf das Vorhandensein dieses Codes untersucht wird.

9. Verfahren nach einem der vorhergehenden Ansprüche,
**dadurch gekennzeichnet,**
**dass** gepulstes Licht verwendet wird und zur Ermittlung der Objekteigenschaft das Lichtobjekt auf das Vorhandensein der verwendeten Pulsfrequenz untersucht wird.

10. Verfahren nach einem der vorhergehenden Ansprüche,
**dadurch gekennzeichnet,**
**dass** als Empfänger (9) ein zweidimensional ortsauflösender Empfänger verwendet wird.

11. Verfahren nach einem der vorhergehenden Ansprüche,
**dadurch gekennzeichnet,**
**dass** das Gegenstanderfassungssignal erzeugt wird, wenn die tatsächliche Helligkeit des erfassten Reflektorbildes (11) eine vorgegebene, bei Fehlen eines Gegenstandes zu erwartende Helligkeit unterschreitet.

12. Verfahren nach einem der vorhergehenden Ansprüche,
**dadurch gekennzeichnet,**
**dass** auch ein innerhalb des Detektionsbereichs (23) auf den Empfänger (9) auftreffendes Lichtobjekt von diesem erfasst, auf vorgegebene Objekteigenschaften untersucht und anhand der ermittelten Objekteigenschaften als Reflektorbild oder als Störlichtobjekt klassifiziert wird.

13. Verfahren nach einem der vorhergehenden Ansprüche,
**dadurch gekennzeichnet,**
**dass** ein Schielwinkel des Senders (1), d.h. ein Winkel zwischen der optischen Achse des Senders (1) und der optischen Achse eines das ausgesandte Licht auf den Reflektor (2) abbildenden optischen Elements (5), und/oder ein Schielwinkel des Empfängers (9), d.h. ein Winkel zwischen der optischen Achse des Empfängers (9) und der optischen Achse eines das reflektierte Licht auf den Empfänger (9) abbildenden optischen Elements (8), durch Berücksichtigen der Position des Reflektorbildes (11) und/oder des Störlichtobjekts (20) auf dem Empfänger (9) kompensiert wird.

14. Vorrichtung zur Detektion eines Gegenstandes (13), mit einem Licht aussendenden Sender (1), einem das ausgesandte Licht reflektierenden Reflektor (2), einem mindestens eindimensional ortsauflösenden, einen Detektionsbereich (23) aufweisenden Empfänger (9), der zum Erfassen eines durch das von dem Reflektor (2) reflektierte Licht auf dem Empfängers (9) abgebildeten Reflektorbildes (11) angeordnet und ausgebildet ist, und einer Auswerteeinheit (10), die zum Auswerten des erfassten Reflektorbildes und zum Erzeugen eines Gegenstanderfassungssignals ausgebildet ist, wenn aufgrund der Auswertung des erfassten Reflektorbilds (11) eine zumindest teilweise Unterbrechung des ausgesandten Lichts erkennbar ist, wobei eine Klassifizierungseinheit (24) vorgesehen ist, die zum Untersuchen eines außerhalb des Detektionsbereichs auf den Empfänger (9) auftreffenden und von diesem erfassten Lichtobjekts auf vorgegebene Objekteigenschaften sowie zum Klassifizieren des Lichtobjekts anhand der ermittelten Objekteigenschaften als Reflektorbild oder als Störlichtobjekt ausgebildet ist,
wobei eine Bewegungserfassungseinheit (25) vorgesehen ist, die zum Erfassen der Bewegung eines Störlichtobjekts auf dem Empfänger ausgebildet ist, und
wobei die Auswerteeinheit (10) zur Erzeugung des Gegenstanderfassungssignals in Abhängigkeit von der erfassten Bewegung des Störlichtobjekts ausgebildet ist, und
wobei die Auswerteeinheit (10) ausgebildet ist, die Auswertung des Reflektorbildes (20) zu unterbrechen, wenn aufgrund der von der Bewegungserfassungseinheit (25) erfassten Bewegung des Störlichtobjekts (20) eine bevorstehende oder eine vorhandene, zumindest teilweise Überlappung des Störlichtobjekts (20) mit dem Detektionsbereich (23) erkennbar ist.

15. Vorrichtung nach Anspruch 14,
**dadurch gekennzeichnet,**
**dass** der Sensor (9) als zweidimensional ortsauflösender Sensor ausgebildet ist.

16. Vorrichtung nach Anspruch 15,
**dadurch gekennzeichnet,**
**dass** eine Subtraktionseinheit (26) vorgesehen ist, mit der bei der Auswertung des Reflektorbildes (11) eine zu erwartende Helligkeit des Störlichtobjekts (20) von der im Detektionsbereich (23) erfassten Helligkeit subtrahiert wird, wenn aufgrund der erfassten Bewegung des Störlichtobjekts (20) eine bevorstehende , zumindest teilweise Überlappung des Störlichtobjekts (20) mit dem Detektionsbereich (23) erkannt wird, und dass die Auswerteeinheit (10) zum Ermitteln der zu erwartenden Helligkeit des Störlichtobjekts (20) aus der Helligkeit des Störlichtobjekts (20) vor Erreichen des Detektionsbereichs (23) ausgebildet ist.

## Claims

1. A method for the detection of an object, in which light is transmitted by a transmitter (1) in the direction of a reflector (2), the transmitted light is reflected at the reflector (2) and is imaged as a reflector image (11) onto a detection region of a receiver (9) with at least one-dimensional spatial resolution and is detected by said receiver and the detected reflector image is evaluated and an object detection signal is generated when an at least partial interruption of the transmitted light is recognized based on the evaluation of the detected reflector image,
wherein a light object incident onto the receiver (9) outside the detection region (23) is detected by said receiver, is examined for predetermined object properties and is classified as a reflector image or as an interfering light object based on the object properties determined;
wherein - in the case of a classification as an interfering light object - a movement of the interfering light object on the receiver (9) is determined; and
wherein the generation of the object detection signal is carried out in dependence on the determined movement of the interfering light object,
**characterized in that**
the evaluation of the reflector image (11) is interrupted when an impending overlap or a present - at least part - overlap of the interfering light object (20) with the detection region is recognized based on the determined movement of the interfering light object.

2. A method in accordance with claim 1,
**characterized in that**
a predefined region of the receiver forms the detection region.

3. A method in accordance with claim 1 or claim 2,
**characterized in that**,
in the case of a classification of the light object as a reflector image, the region of the receiver acted on by the reflector image is fixed as the detection region.

4. A method in accordance with any one of the preceding claims,
**characterized in that**
an object detection state **characterized by** the object detection signal before the interruption of the evaluation of the reflector image (20) is maintained during the interruption.

5. A method in accordance with any one of the preceding claims,
**characterized in that**
an impending overlap of the interfering light object (20) with the detection region (23) is recognized when, with an assumed unchanging movement of the interfering light object (20), the latter would be incident at least partly into the detection region (23) after a predetermined number of evaluation intervals.

6. A method in accordance with any one of the preceding claims,
**characterized in that**
the movement of the interfering light object (20) is determined by detection of the respective position of the interfering light object (20) in time sequential evaluation intervals.

7. A method in accordance with any one of the preceding claims,
**characterized in that**
the position on the receiver and/or the light intensity and/or the shape and/or the direction of movement and/or the speed of movement and/or the wavelength of the light object are determined as object properties.

8. A method in accordance with any one of the preceding claims,
**characterized in that**
the transmitted light is provided with a code, for example by an encoded reflector or filter, and the light object is examined for the presence of this code for the determination of the object property.

9. A method in accordance with any one of the preceding claims,
**characterized in that**
pulsed light is used; and **in that** the light object is examined for the presence of the pulse frequency used for the determination of the object property.

10. A method in accordance with any one of the preceding claims,
**characterized in that**
a receiver with two-dimensional spatial resolution is used as the receiver (9).

11. A method in accordance with any one of the preceding claims,
**characterized in that**
the object detection signal is generated when the actual brightness of the detected reflector image (11) falls below a predetermined brightness to be expected on the lack of an object.

12. A method in accordance with any one of the preceding claims,
**characterized in that**
a light object incident onto the receiver (9) inside the detection region (23) is also detected by said receiver, is examined for predetermined object properties and is classified as a reflector image or as an interfering light object based on the object properties determined.

13. A method in accordance with any one of the preceding claims,
**characterized in that**
an angle of deviation of the transmitter (1), i.e. an angle between the optical axis of the transmitter (1) and the optical axis of an optical element (5) imaging the transmitted light onto the reflector (2), and/or an angle of deviation of the receiver (9), i.e. an angle between the optical axis of the receiver (9) and the optical axis of an optical element (8) imaging the reflected light onto the receiver (9), is compensated by taking account of the position of the reflector image (11) and/or of the interfering light object (20) on the receiver (9).

14. An apparatus for the detection of an object (13) comprising a transmitter (1) transmitting light; a reflector (2) reflecting the transmitted light; a receiver (9) with at least one-dimensional spatial resolution and having a detection region (23), said receiver being arranged and configured for the detection of a reflector image (11) imaged on the receiver (9) by the light reflected by the reflector (2); and an evaluation unit (10) configured for the evaluation of the detected reflector image and for the generation of an object detection signal when an at least partial interruption of the transmitted light can be recognized based on the evaluation of the detected reflector image (11),
wherein a classification unit (24) is provided which is configured for the examination of a light object incident onto the receiver (9) outside the detection region and detected by said receiver for predetermined object properties and for the classification of the light object as a reflector image or as an interfering light object based on the determined object properties;
wherein a movement detection unit (25) is provided which is configured for the detection of the movement of an interfering light object on the receiver; and
wherein the evaluation unit (10) is configured for the generation of the object detection signal in dependence on the detected movement of the interfering light object; and
wherein the evaluation unit (10) is configured to interrupt the evaluation of the reflector image (20) when an impending overlap or a present - at least part - overlap of the interfering light object (20) with the detection region (23) can be recognized based on the movement of the interfering light object (20) detected by the movement detection unit (25).

15. An apparatus in accordance with claim 14,
**characterized in that**
the sensor (9) is configured as a sensor with two-dimensional spatial resolution.

16. An apparatus in accordance with claim 15,
**characterized in that**
a subtraction unit (26) is provided with which, on the evaluation of the reflector image (11), a brightness of the interfering light object (20) to be expected is subtracted from the brightness detected in the detection region (23) when an impending - at least part - overlap of the interfering light object (20) with the detection region (23) is recognized based on the detected movement of the interfering light object (20); and **in that** the evaluation unit (10) is configured for the determination of the brightness of the interfering light object (20) to be expected from the brightness of the interfering light object (20) before reaching the detection region (23).

## Revendications

1. Procédé de détection d'un objet, dans lequel une lumière est émise par un émetteur (1) en direction d'un réflecteur (2), la lumière émise est réfléchie sur le réflecteur (2) et est représentée en tant qu'image de réflecteur (11) sur une zone de détection d'un récepteur (9) à résolution locale au moins unidimensionnelle et est saisie par celui-ci, et l'image de réflecteur saisie est évaluée et un signal de détection d'objet est généré lorsque, en raison de l'évaluation de l'image de réflecteur saisie, une interruption au moins partielle de la lumière émise est reconnue,
dans lequel un objet lumineux incident sur le récepteur (9) à l'extérieur de la zone de détection (23) est détecté par celui-ci, il est analysé vis-à-vis de propriétés d'objet prédéterminées, et il est classifié comme image de réflecteur ou comme objet lumineux parasite en se basant sur les propriétés d'objet déterminées,
et, dans le cas d'une classification en tant qu'objet lumineux parasite, on détermine un mouvement de l'objet lumineux parasite sur le récepteur (9), et
la génération du signal de détection d'objet est effectuée en fonction du mouvement déterminé de l'objet lumineux parasite,
**caractérisé en ce que**
l'évaluation de l'image de réflecteur (11) est interrompue lorsqu'en raison du mouvement déterminé de l'objet lumineux parasite on reconnaît un chevauchement imminent ou présent au moins partiel de l'objet lumineux parasite (20) avec la zone de détection.

2. Procédé selon la revendication 1,
**caractérisé en ce que**
une zone prédéfinie du récepteur forme la zone de détection.

3. Procédé selon la revendication 1 ou 2,
**caractérisé en ce que**
dans le cas d'une classification de l'objet lumineux en tant qu'image de réflecteur, la zone du récepteur sollicitée par l'image de réflecteur est fixée comme zone de détection.

4. Procédé selon l'une des revendications précédentes,
**caractérisé en ce que**
un état de détection d'objet **caractérisé par** le signal de détection d'objet avant l'interruption de l'évaluation de l'image de réflecteur (20) est maintenu pendant l'interruption.

5. Procédé selon l'une des revendications précédentes,
**caractérisé en ce que**
un chevauchement imminent de l'objet lumineux parasite (20) avec la zone de détection (23) est reconnu lorsque, en supposant un mouvement constant de l'objet lumineux parasite (20), celui-ci tomberait au moins partiellement dans la zone de détection (23) après un nombre prédéfini d'intervalles d'évaluation.

6. Procédé selon l'une des revendications précédentes,
**caractérisé en ce que**
on détermine le mouvement de l'objet lumineux parasite (20) en détectant la position respective de l'objet lumineux parasite (20) dans des intervalles d'évaluation successifs dans le temps.

7. Procédé selon l'une des revendications précédentes,
**caractérisé en ce que**
en tant que propriétés d'objet, on détermine la position sur le récepteur et/ou l'intensité lumineuse et/ou la forme et/ou la direction de mouvement et/ou la vitesse de mouvement et/ou la longueur d'onde de l'objet lumineux.

8. Procédé selon l'une des revendications précédentes,
**caractérisé en ce que**
la lumière émise est pourvue d'un code par exemple par un réflecteur ou par un filtre codé, et pour déterminer la propriété d'objet, on analyse l'objet lumineux vis-à-vis de la présence de ce code.

9. Procédé selon l'une des revendications précédentes,
**caractérisé en ce que**
l'on utilise de la lumière pulsée et on analyse l'objet lumineux vis-à-vis de la présence de la fréquence d'impulsion utilisée pour déterminer la propriété d'objet.

10. Procédé selon l'une des revendications précédentes,
**caractérisé en ce que**
on utilise à titre de récepteur (9) un récepteur à résolution locale bidimensionnelle.

11. Procédé selon l'une des revendications précédentes,
**caractérisé en ce que**
on génère le signal de détection d'objet lorsque la luminosité réelle de l'image de réflecteur saisie (11) passe au-dessous d'une luminosité donnée à attendre en absence d'un objet.

12. Procédé selon l'une des revendications précédentes,
**caractérisé en ce que**
également un objet lumineux incident sur le récepteur (9) à l'intérieur de la zone de détection (23) est détecté par celui-ci, est analysé vis-à-vis des propriétés d'objet données et est classifié comme image de réflecteur ou comme objet lumineux parasite en se basant sur les propriétés d'objet déterminées.

13. Procédé selon l'une des revendications précédentes,
**caractérisé en ce que**
un angle de strabisme de l'émetteur (1), c'est-à-dire un angle entre l'axe optique de l'émetteur (1) et l'axe optique d'un élément optique (5) représentant la lumière émise sur le réflecteur (2), et/ou un angle de strabisme du récepteur (9), c'est-à-dire un angle entre l'axe optique du récepteur (9) et l'axe optique d'un élément optique (8) représentant la lumière réfléchie sur le récepteur (9) est compensé par prise en compte de la position de l'image de réflecteur (11) et/ou de l'objet lumineux parasite (20) sur le récepteur (9).

14. Dispositif de détection d'un objet (13), comportant un émetteur (1) émettant de la lumière, un réflecteur (2) réfléchissant la lumière émise, un récepteur (9) à résolution locale au moins unidimensionnelle et présentant une zone de détection (23), qui est prévu et réalisé pour détecter une image de réflecteur (11) représentée sur le récepteur (9) par la lumière réfléchie par le réflecteur (2), et une unité d'évaluation (10) qui est réalisée pour évaluer l'image de réflecteur saisie et pour générer un signal de détection d'objet lorsque, en raison de l'évaluation de l'image de réflecteur saisie (11), au moins une interruption partielle de la lumière émise est reconnaissable,
dans lequel
il est prévu une unité de classification (24) qui est réalisée pour analyser vis-à-vis des propriétés d'objet données un objet lumineux incident sur le récepteur (9) à l'extérieur de la zone de détection et détecté par celui-ci, ainsi que pour classer l'objet lumineux comme image de réflecteur ou comme objet lumineux parasite en se basant sur les propriétés d'objet déterminées,
il est prévu une unité de détection de mouvement (25) qui est réalisée pour détecter le mouvement d'un objet lumineux parasite sur le récepteur, et l'unité d'évaluation (10) est réalisée pour générer le signal de détection d'objet en fonction du mouvement détecté de l'objet lumineux parasite, et l'unité d'évaluation (10) est réalisée pour interrompre l'évaluation de l'image de réflecteur (20) lorsque, en raison du mouvement de l'objet lumineux parasite (20) détecté par l'unité de détection de mouvement (25), on reconnaît un chevauchement imminent ou présent au moins partiel de l'objet lumineux parasite (20) avec la zone de détection (23).

15. Dispositif selon la revendication 14,
**caractérisé en ce que**
le détecteur (9) est réalisé sous forme de détecteur à résolution locale bidimensionnelle.

16. Dispositif selon la revendication 15,
**caractérisé en ce que**
il est prévu une unité de soustraction (26) par laquelle, lors de l'évaluation de l'image de réflecteur (11), on soustrait une luminosité à attendre de l'objet lumineux parasite (20) de la luminosité détectée dans la zone de détection (23) lorsque, en raison du mouvement détecté de l'objet lumineux parasite (20), on reconnaît un chevauchement imminent au moins partiel de l'objet lumineux parasite (20) avec la zone de détection (23), et **en ce que** l'unité d'évaluation (10) est réalisée pour déterminer la luminosité à attendre de l'objet lumineux parasite (20) à partir de la luminosité de l'objet lumineux parasite (20) avant d'atteindre la zone de détection (23).
